# EUROPEAN PATENT SPECIFICATION

(11) **EP 4 055 742 B1**
(45) Date of publication and mention of the grant of the patent: **28.01.2026**
(21) Application number: 20803800.0
(22) Date of filing: 06.11.2020
(51) Int. Cl.: H04L 1/18

(54) **METHOD AND DEVICE FOR DETERMINING TRANSMISSION PRIORITY**
VERFAHREN UND VORRICHTUNG ZUM BESTIMMEN EINER ÜBERTRAGUNGSPRIORITÄT
PROCÉDÉ ET DISPOSITIF DE DÉTERMINATION DE PRIORITÉ DE TRANSMISSION

(30) Priority: 07.11.2019 WO PCT/CN2019/116371
(43) Date of publication of application: 14.09.2022
(73) Proprietor: Telefonaktiebolaget LM Ericsson (publ), 164 83 Stockholm (SE)
(72) Inventor: ZHANG, Zhang, Beijing, 100102 (CN); ORSINO, Antonino, 02480 Kirkkonummi (FI); BLASCO SERRANO, Ricardo, 02260 Espoo (FI); ZHANG, Congchi, Shanghai, 201204 (CN)
(74) Representative: Ericsson
(86) International application number: PCT/EP2020/081312
(87) International publication number: WO 2021/089792

(56) References cited:
- INTERDIGITAL: "Retransmissions Aspects for UL Data-Data Intra-UE Prioritization", vol. RAN WG2, no. Xi'An, China; 20190408 - 20190412, 6 April 2019 (2019-04-06), XP051700898, Retrieved from the Internet <URL:http://www.3gpp.org/ftp/Meetings%5F3GPP%5FSYNC/RAN2/Docs/R2%2D1903555%2Ezip> [retrieved on 20190406]
- LG ELECTRONICS INC: "MAC PDU delivery with priority information", vol. RAN WG2, no. Prague, Czech; 20190826 - 20190830, 16 August 2019 (2019-08-16), XP051768965, Retrieved from the Internet <URL:http://www.3gpp.org/ftp/tsg_ran/WG2_RL2/TSGR2_107/Docs/R2-1911205.zip> [retrieved on 20190816]
- HUAWEI: "Prioritization of RLC re-transmissions", vol. RAN WG3, no. Venice, Italy; 20131007 - 20131011, 27 September 2013 (2013-09-27), XP050719853, Retrieved from the Internet <URL:http://www.3gpp.org/ftp/tsg_ran/WG3_Iu/TSGR3_81bis/Docs/> [retrieved on 20130927]
- ERICSSON: "Discussion on SL information reporting over Uu", vol. RAN WG2, no. Chongqing, China; 20191014 - 20191018, 3 October 2019 (2019-10-03), XP051804201, Retrieved from the Internet <URL:https://ftp.3gpp.org/tsg_ran/WG2_RL2/TSGR2_107bis/Docs/R2-1913324.zip R2-1913324- Discussion on SL information reporting over Uu.docx> [retrieved on 20191003]
- HUAWEI ET AL: "Support of QoS for PC5-based V2V transport", vol. RAN WG2, no. Nanjing, China; 20160523 - 20160527, 22 May 2016 (2016-05-22), XP051105217, Retrieved from the Internet <URL:http://www.3gpp.org/ftp/Meetings_3GPP_SYNC/RAN2/Docs/> [retrieved on 20160522]
- LG ELECTRONICS INC: "Coexistence of transmission of V2X sidelink communication and Uu", vol. RAN WG2, no. Reno, U.S.A.; 20161114 - 20161118, 13 November 2016 (2016-11-13), XP051178311, Retrieved from the Internet <URL:http://www.3gpp.org/ftp/Meetings_3GPP_SYNC/RAN2/Docs/> [retrieved on 20161113]
- INTERDIGITAL: "Retransmissions Aspects for UL Data-Data Intra-UE Prioritization", vol. RAN WG2, no. Xi'An, China; 20190408 - 20190412, 6 April 2019 (2019-04-06), XP051700898, Retrieved from the Internet <URL:http://www.3gpp.org/ftp/Meetings%5F3GPP%5FSYNC/RAN2/Docs/R2%2D1903555%2Ezip> [retrieved on 20190406]
- LG ELECTRONICS INC: "MAC PDU delivery with priority information", vol. RAN WG2, no. Prague, Czech; 20190826 - 20190830, 16 August 2019 (2019-08-16), XP051768965, Retrieved from the Internet <URL:http://www.3gpp.org/ftp/tsg_ran/WG2_RL2/TSGR2_107/Docs/R2-1911205.zip> [retrieved on 20190816]
- HUAWEI: "Prioritization of RLC re-transmissions", vol. RAN WG3, no. Venice, Italy; 20131007 - 20131011, 27 September 2013 (2013-09-27), XP050719853, Retrieved from the Internet <URL:http://www.3gpp.org/ftp/tsg_ran/WG3_Iu/TSGR3_81bis/Docs/> [retrieved on 20130927]
- ERICSSON: "Discussion on SL information reporting over Uu", vol. RAN WG2, no. Chongqing, China; 20191014 - 20191018, 3 October 2019 (2019-10-03), XP051804201, Retrieved from the Internet <URL:https://ftp.3gpp.org/tsg_ran/WG2_RL2/TSGR2_107bis/Docs/R2-1913324.zip R2-1913324- Discussion on SL information reporting over Uu.docx> [retrieved on 20191003]
- HUAWEI ET AL: "Support of QoS for PC5-based V2V transport", vol. RAN WG2, no. Nanjing, China; 20160523 - 20160527, 22 May 2016 (2016-05-22), XP051105217, Retrieved from the Internet <URL:http://www.3gpp.org/ftp/Meetings_3GPP_SYNC/RAN2/Docs/> [retrieved on 20160522]
- LG ELECTRONICS INC: "Coexistence of transmission of V2X sidelink communication and Uu", vol. RAN WG2, no. Reno, U.S.A.; 20161114 - 20161118, 13 November 2016 (2016-11-13), XP051178311, Retrieved from the Internet <URL:http://www.3gpp.org/ftp/Meetings_3GPP_SYNC/RAN2/Docs/> [retrieved on 20161113]

## Description

### TECHNICAL FIELD

The present disclosure generally relates to the technical field of wireless communications, and particularly, to methods, devices, computer readable storage and carrier for determining transmission priority.

### BACKGROUND

This section is intended to provide a background to the various embodiments of the technology described in this disclosure.

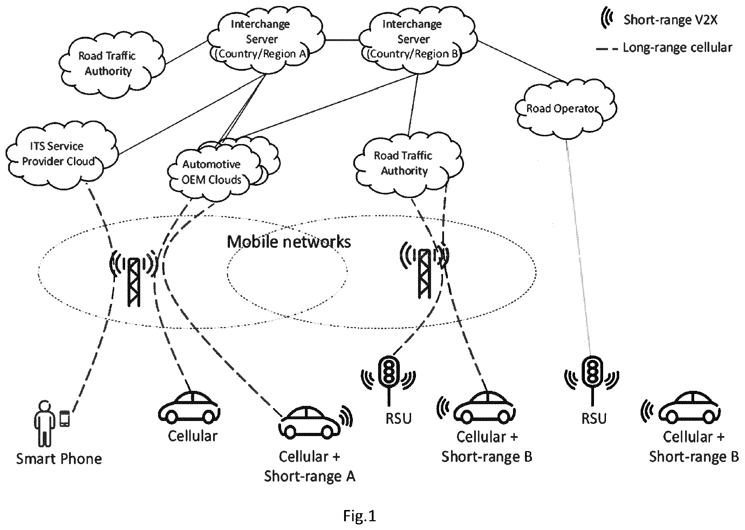

Cellular Intelligent Transport Systems (ITS) aims at defining a new cellular eco-system for the delivery of vehicular services and their dissemination. Such eco-system includes both short range and long range V2X service transmissions, as depicted in Fig.1. In particular, short range communication involves transmissions over the device-to-device (D2D) link, also defined as sidelink or PC5 interface in 3GPP, towards other vehicular UEs or road side units (RSU). On the other hand, for long range transmission, it is intended the transmission over the Uu interface between a UE and a base station, in which case packets maybe disseminated to different ITS service providers which could be road traffic authorities, road operators, automotive OEMs, cellular operators, etc.

When it comes to the sidelink interface, the first standardization effort in 3GPP dates back to Rel. 12, targeting public safety use cases. Since then, a number of enhancements have been introduced with the objective to enlarge the use cases that could benefit of the D2D technology. In particular, in LTE Rel-14 and Rel-15, the extensions for the device-to-device work consist of support of V2X communication, including any combination of direct communication between vehicles, pedestrians and infrastructure.

While LTE V2X mainly aims at traffic safety services, NR V2X has a much broader scope including not only basic safety services but also targeting non-safety applications, such as sensor/data sharing between vehicles with the objective to strengthen the perception of the surrounding environment. Hence a new set of applications, such as vehicles platooning, cooperative maneuver between vehicles, remote/autonomous driving may enjoy such enhanced sidelink framework.

In this new context, the expected requirements to meet the needed data rate, capacity, reliability, latency, communication range and speed are made more stringent. For example, given the variety of services that can be transmitted over the sidelink, a robust QoS framework which takes into account the different performance requirements of the different V2X services seems to be needed. Additionally, new radio protocols to handle more robust and reliable communication should be designed. All of this is currently under the investigation of 3GPP in NR Rel.16.

Document D1 INTERDIGITAL: "Retransmissions Aspects for UL Data-Data Intra-UE Prioritization", 3GPP DRAFT, R2-1903555, discloses that if the priority indicated for the dynamic grant on which a TB is retransmitted is higher that the priority assigned for the conflicting configured grant on which a new transmission can be made, the UE prioritizes the dynamic grant.

### SUMMARY

It is objects of the present disclosure to address one or more of the problems arisen in the D2D link.

The scope of protection of the invention is defined in independent claims 1, 12 and 14.

### BRIEF DESCRIPTION OF THE DRAWINGS

The foregoing and other features of this disclosure will become more fully apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and details through use of the accompanying drawings.
Fig. 1 illustrates a schematic view of a cellular intelligent transport system.
Fig. 2 illustrates a schematic view of new radio sidelink radio bearer configuration provided from network.
Fig. 3 illustrates a schematic view of new radio sidelink unicast links.
Fig. 4 illustrates a flowchart of a method used for a device to determine transmission priority for its transmission to another device in a device-to-device communication according to embodiments of the present disclosure.
Fig. 5 illustrates a flowchart of a method used for the device to derive transmission priority related configuration according to embodiments of the present disclosure.
Fig. 6 illustrates a schematic block diagram of a device according to embodiments of the present disclosure.
Fig. 7 schematically illustrates an embodiment of an arrangement 700 which may be used in the device.

### DETAILED DESCRIPTION

Embodiments herein will be described in detail hereinafter with reference to the accompanying drawings, in which embodiments are shown. These embodiments herein may, however, be embodied in many different forms and should not be construed as being limited to the embodiments set forth herein. The elements of the drawings are not necessarily to scale relative to each other. Like numbers refer to like elements throughout.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood. It will be further understood that terms used herein should be interpreted as having a meaning that is consistent with their meaning in the context of this specification and the relevant art and will not be interpreted in an idealized or overly formal sense unless expressly so defined herein. For example, "predefined/predefinition" used herein means parameter(s) such as configuration(s) being designated one or more values in one or more standard(s), or say one or more specification(s), while "preconfigure/pre-configuration" used herein means parameter(s) such as configuration(s) being configured in advance by the radio network or the device itself either before delivery from the manufacturer or during operation beforehead, and the word "specify/specified" herein may refer to selecting/selected or picking/picked out something by the radio network or the device itself. Generally, the predefined, preconfigured or specified things are well known at least between two ends of a communication.

For LTE SL, different from the QoS control mechanism used in cellular network, QoS control is based on the concept of ProSe Per-Packet Priority (PPPP) and ProSe Per-Packet Reliability (PPPR). When the ProSe upper layer (i.e. above PC5 access stratum) passes a protocol data unit for transmission to the PC5 access stratum, the ProSe upper layer provides a ProSe Per-Packet Priority from a range of 8 possible values. Each PPPP expresses a relative priority compared to other PPPPs, i.e. PPPP=1 has highest priority than PPPP=2, PPPP=3, etc. PPPPs also expresses the relative latency requirements, i.e. PPPP=1 has more stringent packet delay budget (PDB) requirements than PPPP=2, PPPP=3, etc. Additionally, along with the PPPP, upper layers may also indicate the PPPR value of a given packet. Priority queues (both intra-UE and inter-UE) are expected to be served in priority order i.e. UE serves all packets associated with ProSe Per-Packet Priority N before serving packets associated with priority N+1 (lower number meaning higher priority). Similarly, the PPPR is used to determine whether SL packet duplication to enhance transmission reliability shall be used or not.

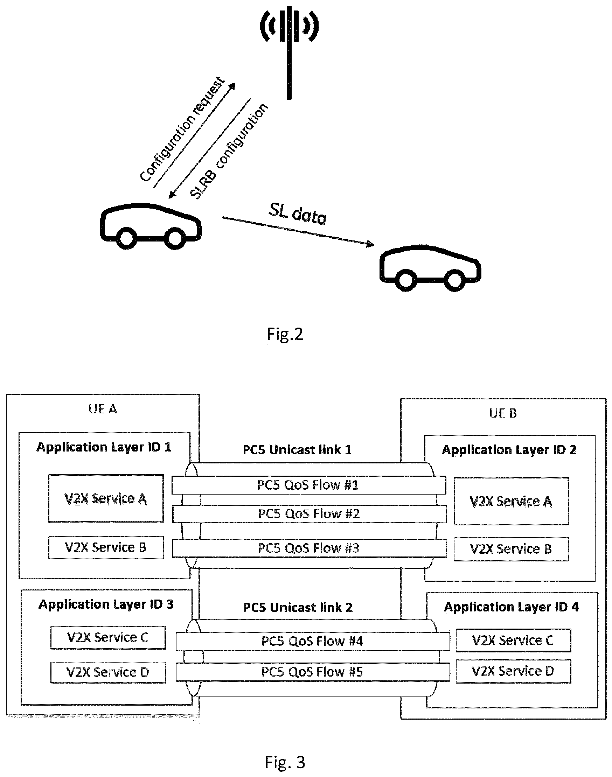

In NR, sidelink (SL) QoS flow model is adopted. At NAS layer, UE maps one V2X packet into the corresponding SL QoS flow and then maps to a SL radio bearer at SDAP layer. SL radio bearer (SLRB) configuration, including the QoS flow to SLRB mapping, is either preconfigured or configured by the network (NW) when the UE is in coverage. For instance, as shown in Fig. 2, when UE wants to establish a new SL QoS flow/SLRB for a new service, it can send a request to the associated gNB. The request can include the QoS information of the service. gNB then determines appropriate SLRB configuration to support such SL QoS flow. After receiving the SLRB configuration from gNB, the UE establishes the local SLRB accordingly and prepare for data transmission over the SL. Note that to enable successful reception at the reception (RX) UE side, transmission (TX) UE might have to inform RX UE regarding necessary parameters, e.g. sequence number space for PDCP/RLC, before the data transmission starts.

For NR sidelink, unicast communication is the transmission and reception between a pair of UEs. Per unicast link between the UE pair is identified by the combination of two UEs' Layer 2 (L2) IDs. Within each unicast link, there can be multiple PC5 QoS flows and SL radio bearers (SLRB) established to support different V2X services, as shown in Fig. 3.

For NR SL groupcast communication, a group ID is used as the L2 destination ID of any groupcast packet transmission. Other UEs within the same group, sharing the same group ID, are the target receivers. Similar as in unicast, there can be multiple services running within the group (i.e., identified by the group ID) supported by multiple PC5 QoS flows/SLRBs.

For NR SL broadcast communication, a service ID is used as the L2 destination ID of any broadcast packet transmission. Other UEs interested in the same service are the target receivers. For SL broadcast, there is usually one-to-one mapping between the L2 destination ID and supported PC5 QoS flow/SLRB.

In uplink transmission, the LCP procedure determines data from which logical channel should be treated and in which order. UE first determines the priority and starvation status of a LCH based on the following LCH configurations.
- priority where an increasing priority value indicates a lower priority level;
- prioritisedBitRate which sets the Prioritized Bit Rate (PBR);
- bucketSizeDuration which sets the Bucket Size Duration (BSD)

Then, as a general rule, the data from starved LCH should be transmitted first, and data from LCH of higher priority should be transmitted first. Besides, with a given uplink grant, when the UE selects the LCH to transmit, the following restrictions are also taken into account:
- allowedSCS-List which sets the allowed Subcarrier Spacing(s) for transmission;
- maxPUSCH-Duration which sets the maximum PUSCH duration allowed for transmission;
- configuredGrantType1Allowed which sets whether a configured grant Type 1 can be used for transmission;
- allowedServingCells which sets the allowed cell(s) for transmission.

For sidelink transmission, the LCP procedure is applied when a new sidelink transmission is performed. When the MAC entity allocates resources to sidelink LCHs having data available for transmission, it should first select the Layer2 Destination which has the highest priority LCH of all starved sidelink LCHs belonging to each Layer2 Destination. Note that only LCHs having data available for transmission and data packet satisfying the congestion control condition are considered. After this, sidelink LCHs belonging to the selected Layer2 Destination are served in decreasing order of priority until either the data for the sidelink logical channel(s) or the sidelink grant is exhausted, whichever comes first.

For sidelink transmission, each packet transmitted via Physical Layer Shared Channel (PSSCH) is associated with a SCI via Physical Layer Control Channel (PSCCH). For NR SL, SCI contains at least the following information to enable successful decoding and proper treatment at the receiver UE
- The associated PSSCH resources
- DMRS pattern
- L1 source and destination ID
- Zone ID
- Required communication range
- Priority (3 bits are assumed)

In LTE sidelink, the priority carried in SCI is the highest priority among the LCHs associated with the transport block. In case of mode 2 autonomous resource allocation, a UE triggers reselection of already signaled resource(s) as a resource reservation in case of overlap with resource(s) of a higher priority reservation from a different UE (i.e., per comparison of the priorities in SCIs) and, SL-RSRP measurement associated with the resource reserved by that different UE is larger than an associated SL-RSRP threshold. In addition, in LTE V2X, the priority value is associated with latency requirement and is used to determine the scheduling window size (e.g. T1 and T2). As such with a given priority value, the transmitter UE can select resources before the maximum latency.

Applicant has identified several situations e.g. in NR sidelink, such as potential format mismatch of logical channel priority and SCI priority. For example the SCI priority is assumed to be 3-bit while the format of logical channel priority is not decided yet (which is traditionally 4-bit in UL); a MAC PDU may contain data from different LCHs associated with different LCH configuration such as priority, prioritisedBitRate, bucketSizeDuration; it is a retransmission due to receiving NACK feedback, the transmission is to trigger other procedures like SL CSI report or RSRP report, the presence of another non-data element like SL MAC CE. Also, the use of priority in physical layer and the use of LCH priority in MAC layer are not exactly the same. To be more specific, LCH priority implies the importance of the LCH or supported service while not necessarily reflects the latency requirement. However, the priority in physical layer is used to reflect the importance and the latency requirement, which leads to a sub-optimal design for instance, a PC5-RRC message could be of high importance but high latency tolerance at the same time.

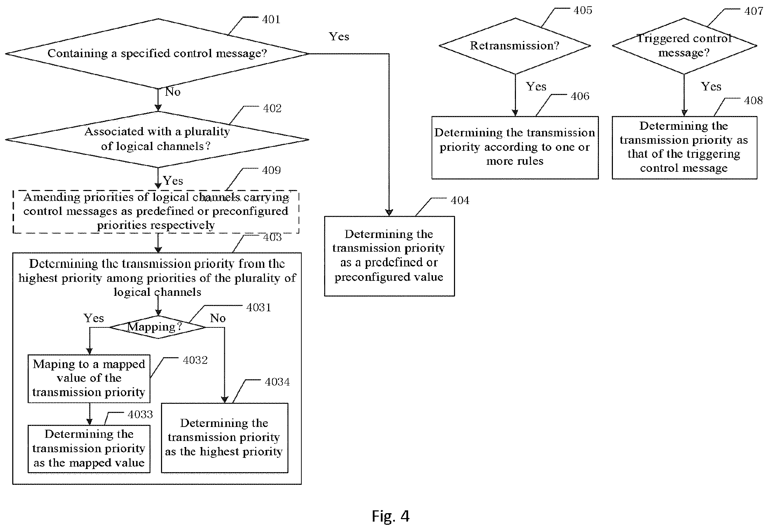

Fig. 4 illustrates a flowchart of a method used for a device to determine transmission priority for its transmission to another device in a device-to-device communication according to embodiments of the present disclosure.

The device is in a D2D communication and also is or was covered by a radio network is e.g., a 5G network, or any other appropriate radio network. The method shown in Fig. 4 comprises a plurality of branches, and each branch relates to a principle of determining transmission priority. Any one branch of Fig. 4 can be selected as a dependent method used for the device to determine transmission priority for its transmission to another device in a device-to-device communication. Any combination of the branches as appropriate can be selected as a dependent method used for the device to determine transmission priority for its transmission to another device in a device-to-device communication.

In a first branch, at step 401, the device determines whether transport block for transmission contains a specified control message. The specified control message may be carried in e.g. a SL MAC CE or a radio resource control (RRC) message, the specified control message comprises e.g. a report of channel state information (CSI) values (such as CQI, PMI, RI, etc.), a signal power report and a signal strength report (such as RSSI or RSRP report, etc.) etc. The specified control message may further comprise e.g. a triggering control message triggering a control signaling procedure to be initiated in a receiving device of the transmission, such as triggering the receiving device of the transmission to perform any of the following: RRC message sending, CSI value (such as CQI, PMI, RI, etc.) reporting, a signal power reporting and a signal strength reporting (such as RSSI or RSRP reporting, etc.) etc. Some control message, e.g. buffer state report, may be excluded from the set of specified control messages.

If the result of step 401 is no, this branch proceeds to step 402, where the device determines whether the transport block for transmission is associated with a plurality of logical channels.

If the result of step 402 is yes, this branch proceeds to step 403, where the device determines the transmission priority from the highest priority among priorities of the plurality of logical channels.

The transport block such as MAC PDU is used to multiplex the plurality of logical channels into a single channel such as the transport channel in which the transport block is transmitted.

In an embodiment, the plurality of logical channels carries control messages. Therefore, priorities of logical channels carrying control messages may also be taken into account when determining the transmission priority of the transport block.

In an embodiment, an additional step 409 is performed before proceeding to step 403. At step 409, priorities of logical channels carrying control messages is amended as predefined or preconfigured priorities respectively, wherein priorities of logical channels carrying different control messages may be amended as the same value, or different values. With this step, roles of logical channels carrying control messages could be applied flexibly.

In a further embodiment, a mapping may be required, as e.g. the representations of the transmission priority and logical channel priority may be different. For example, the size of logical channel priority is traditionally 4 bits, while the size of the transmission priority is e.g. 3 bit. Then a mapping between the 4 bit priority value and the 3 bit priority value is required. Suppose the 4 bit priority comprises values 0000, 0001, 0010, 0011, 0100, 0101, 0110, 0111, 1000, 1001, 1010, 1011, 1100, 1101, 1110, 1111, and the 3 bit priority comprises values 000, 001, 010, 011, 100, 101, 110, 111, then a mapping table could be as follows:

| | | | | | | | | |
|---|---|---|---|---|---|---|---|---|
| 3 bits | 000 | 001 | 010 | 011 | 100 | 101 | 110 | 111 |
| 4 bits | 0000 0001 | 0010, 0011 | 0100, 0101 | 0110, 0111 | 1000, 1001 | 1010, 1011 | 1100, 1101 | 1110, 1111 |

Therefore, the step 403 further comprises the following steps:
at step 4031, the device determines whether a mapping between the transmission priority and the highest priority among priorities of the plurality of logical channels is required. If the result is yes, then at step 4032, the device maps the highest priority among priorities of the plurality of logical channels to a mapped value of the transmission priority based on a map between a first group of logical channel priorities and a second group of transmission priorities, and at step 4033, determines the transmission priority as the mapped value. Otherwise, the UE simply determines the transmission priority as the highest priority among priorities of the plurality of logical channels at step 4034.

In a second branch, if the result of step 401 is yes, this branch proceeds to step 404, where the device determines the transmission priority as a predefined or preconfigured value.

In a third branch, at step 405, the device determines whether the transmission is a retransmission. If the result is yes, then this branch proceeds to step 406, where the device determines the transmission priority according to any one or more of rules comprising:
the transmission priority is different from that of the last transmission for the same transport block, e.g., the (n+1)^{th} transmission should have a higher (or lower) transmission priority than the n^{th} transmission, both (n+1)^{th} transmission and n^{th} transmission referring to the transmissions for the same transport block;
the transmission priority is the same as that of the last transmission for the same transport block,
the transmission priority do not go beyond limit of the highest and/or lowest priority value, e.g., 3 bit value 111.

In a further embodiment, the rules further comprise:
offset between the priorities of the transmission and the last transmission for the same transport block varies based on retransmission types comprising blind retransmission and Hybrid Automatic Repeat reQuest (HARQ) feedback based retransmission, e.g., for blind retransmission, the transmission priority of the (n+1)^{th} transmission is 2 steps higher (or lower) than that of the n^{th} transmission, while for HARQ feedback based retransmission, the transmission priority of the (n+1)^{th} transmission is 1 steps higher (or lower) than that of the n^{th} transmission, both (n+1)^{th} transmission and n^{th} transmission referring to the transmissions for the same transport block;
offset between the priorities of the transmission and the last transmission for the same transport block varies based on retransmission times, e.g., the transmission priority of the (n+1)^{th} transmission is 2 steps higher (or lower) than that of the n^{th} transmission, while the transmission priority of the n^{th} transmission is 1 steps higher (or lower) than that of the (n-1)^{th} transmission, all (n+1)^{th} transmission, n^{th} and (n-1)^{th} transmission referring to the transmissions for the same transport block; and
offset between the priorities of the transmission and the last transmission for the same transport block is fixed.

If a combination of the rules above is applied, make sure the combined rules do not conflict with each other. In a combination for instance, assuming a lower value indicates a higher priority and the initial transmission is of priority value 5, then every time a retransmission is scheduled for the same MAC PDU, the priority value decreased/increased by 1 (which means a higher/lower priority) and is lower/higher bounded by priority value 1/8 (which means the highest/lowest allowed priority).

In a fourth branch, at step 407, the device determines whether the transport block for transmission comprises a triggered control message in response to a triggering control message. The triggered control message may comprise e.g. a CSI value (such as CQI, PMI, RI, etc.) report, a signal power report and a signal strength report (such as RSSI or RSRP reporting, etc.) etc. The triggering control message may comprise e.g. a CSI report request, transmission of CSI-RS, a request for RSRP report, etc.

If the result of step 407 is yes, the branch proceeds to step 408, where the device determines the transmission priority as that of the triggering control message.

In some embodiments, the transport block is e.g. a MAC packet data unit (PDU).

In some embodiments, the transmission priority is not limited to the physical layer (layer-1), but could be a layer-1 parameter and used in a layer-1 procedure, and/or a layer-2 parameter and used in a layer-2 procedure. Optionally, as the representations of transmission priorities for different layers vary, a mapping between them can be defined to enable them to be mapped to each other.

In some embodiments, the transmission priority of a respective layer is determined from a respective one or more of the principles. For example, the transmission priority of layer-1 is determined following principles of a combination of the first branch and the second branch only discussed above and shown in Fig. 4, while the transmission priority of layer-2 is determined following principles of a combination of the first branch and the third branch only discussed above and shown in Fig. 4.

In some embodiments, the predefined or preconfigured value can be predefined or preconfigured by the either the device or radio network by which the device is covered.

In some embodiments, the device determines a transmission priority in a SL process of a HARQ entity.

Once determined, the transmission priority could be used in strategies regarding the transmission, or indicated in a control signaling associated with the transmission to be used in e.g. resource allocation or transmission parameter selections, e.g. power, MCS etc. Optionally, the mapping discussed above may only to be applied to the former case, i.e., the transmission priority is used locally, and/or the latter case, i.e., the transmission priority is transmitted.

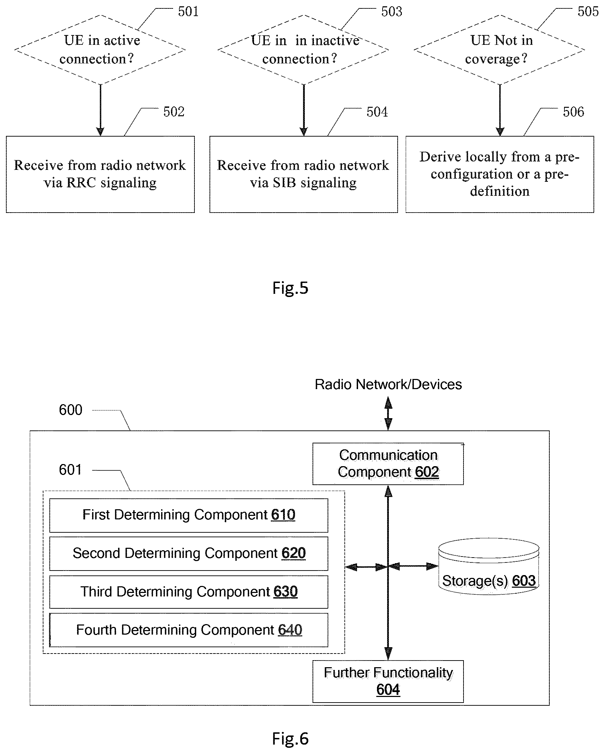

Fig. 5 illustrates a flowchart of a method used for the device to derive transmission priority related configuration according to embodiments of the present disclosure. In some embodiments, the transmission priority related configuration includes at least one of the following rules:
- a mapping between at least a logical channel priority and a transmission priority,
- priorities of the plurality of logical channels (it is noted that not only logical channels carrying data are accounted, but also logical channels carrying control messages are accounted),
- a predefined or preconfigured value determined as the transmission priority in response to the transport block for transmission contains a specified control message as mentioned above,
- the highest and/or lowest priority value,
- offsets between priorities of the transmission and the last transmission for the same transport block of different retransmission types and/or different retransmission times.

In an embodiment, if it is determined at step 501 that the device is in an active connection to a radio network by which it is covered, e.g. in an RRC_CONNECTED state (501), the device may receive the transmission priority related configuration from the radio network via e.g. RRC signaling at step 502.

In an alternative embodiment, the device may receive the transmission priority related configuration via e.g. RRC signaling from the radio network even though the device is not in an active connection to the radio network, as the technology evolves.

In an embodiment, if it is determined at step 503 that the device is in an inactive connection to a radio network by which it is covered, e.g. in an RRC_INACTIVE or IDLE state, the device may receive the transmission priority related configuration from the radio network via e.g. SIB signaling at step 504.

In an alternative embodiment, the device may receive the transmission priority related configuration via e.g. SIB signaling from the radio network even though the device is not in an inactive connection to the radio network, as the technology evolves.

In an embodiment, if it is determined at step 505 that the device is out of coverage of any radio network, the device may derive the transmission priority related configuration locally from a predefinition or a pre-configuration at step 506.

In an alternative embodiment, the device may derive the transmission priority related configuration locally from a predefinition or a pre-configuration even though the device is within a coverage of a radio network.

By scenarios or as a whole, determination of priorities in different situations are considered, also, mappings between priorities of different layers are enabled and flexible configuration addressing different QoS combinations are thus achieved.

Fig. 6 is a schematic block diagram of a device 600 according to embodiments of the present disclosure. The device may probably covered by a radio network, such as a 5G network, or any other appropriate radio network.

The part of device 600 which is most affected by the adaptation of the herein described method, e.g., a part of the method 400, is illustrated as an arrangement 601, surrounded by a dashed line. The device 600 and arrangement 601 may be further configured to communicate with other entities e.g. the radio network or D2D devices via a communication component 602 which may also be regarded as part of the arrangement 601 (now shown). The communication component 602 comprises means for radio communication or wireless communication, comprising D2D communications. The arrangement 601 or device 600 may further comprise a further functionality 604, such as functional components providing regular UE functions, and may further comprise one or more storage(s) 603.

The arrangement 601 could be implemented, e.g., by one or more of: a processor or a microprocessor and adequate software and memory for storing of the software, a Programmable Logic Device (PLD) or other electronic component (s) or processing circuitry configured to perform the actions described above, and illustrated, e.g., in Fig. 4. The arrangement 601 of the device 600 may be implemented and/or described as follows.

Referring to Fig. 6, The device 600 is configured to determine transmission priority for its transmission to another device in a device-to-device communication, comprising, alternatively or additionally, comprising all of, but enabling, any one or more of a first determining component 610, a second determining component 620, a third determining component 630 and a fourth determining component 640. The first determining component 610 is configured to perform the first branch discussed above with reference to Fig. 4, i.e., steps 401, 402 and 403, the second determining component 620 is configured to perform the second branch discussed above with reference to Fig. 4, i.e., steps 401 and 404, the third determining component 630 is configured to perform the third branch discussed above with reference to Fig. 4, i.e., steps 404 and 405, the fourth determining component 640 is configured to perform the fourth branch discussed above with reference to Fig. 4, i.e., steps 407 and 408.

It should be noted that two or more different components in this disclosure may be logically or physically combined. For example, the first determining component 610 to the fourth determining component 640 may be combined as one single unit.

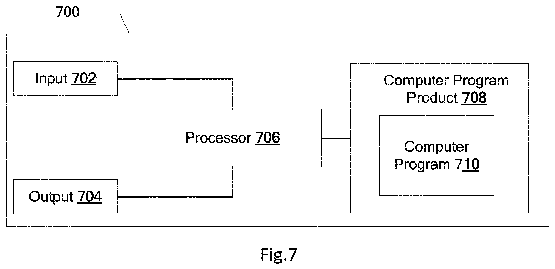

Fig. 7 schematically shows an embodiment of an arrangement 700 which may be used in the device 600. Comprised in the arrangement 700 are here a processor 706, e.g., with a Digital Signal Processor (DSP). The processor 706 may be a single unit or a plurality of units to perform different actions of procedures described herein. The arrangement 700 may also comprise an input unit 702 for receiving signals from other entities, and an output unit 704 for providing signal(s) to other entities. The input unit and the output unit may be arranged as an integrated entity or as illustrated in the example of Fig. 6.

Furthermore, the arrangement 700 comprises at least one computer program product 708 in the form of a non-volatile or volatile memory, e.g., an Electrically Erasable Programmable Read-Only Memory (EEPROM), a flash memory and a hard drive. The computer program product 708 comprises a computer program 710, which comprises code/computer readable instructions, which when executed by the processor 706 in the arrangement 700 causes the arrangement 700 and/or the device in which it is comprised to perform the actions, e.g., of the procedure described earlier in conjunction with Figs. 4 and/or 5.

The computer program 710 may be configured as a computer program code structured in computer program modules. Hence, in an exemplifying embodiment when the arrangement 700 is used in the device 600, the code in the computer program of the arrangement 700 when executed, will cause the processor 706 to perform the steps as described with reference to Figs. 4 and/or 5.

The processor 706 may be a single Central Processing Unit (CPU), but could also comprise two or more processing units. For example, the processor 706 may include general purpose microprocessors, instruction set processors and/or related chip sets and/or special purpose microprocessors such as Application Specific Integrated Circuits (ASIC). The processor 706 may also comprise board memory for caching purposes. The computer program 710 may be carried by a computer program product 708 connected to the processor 706. The computer program product may comprise a computer readable medium on which the computer program is stored. For example, the computer program product may be a flash memory, a Random-access memory (RAM), a Read-Only Memory (ROM), or an EEPROM, and the computer program modules described above could in alternative embodiments be distributed on different computer program products in the form of memories within the UE.

By scenarios or as a whole, determination of priorities in different situations are considered, also, mappings between priorities of different layers are enabled and flexible configuration addressing different QoS combinations are thus achieved.

The scope of protection of the invention is defined in the appended set of claims.

## Claims

1. A method performed by a device (600) to determine a transmission priority for a transmission to another device (120) in a device-to-device communication, the method comprising
determining whether the transmission is a retransmission; and
in response to the transmission being a retransmission (405), determining (406) the transmission priority according to a rule comprising the transmission priority is different from a priority of the last transmission for the same transport block, wherein in response to the transport block for transmission being associated with a plurality of logical channels (402), and the transport block for transmission not containing a specified control message (401), determining the transmission priority as the highest priority among priorities of the plurality of logical channels, and wherein the device receives transmission priority related configuration from the radio network via signaling (504), and wherein the transmission priority related configuration includes priorities of the plurality of logical channels.

2. The method of claim 1, further comprising
in response to the transport block for transmission comprising a triggered control message in response to a triggering control message (407), determining the transmission priority as that of the triggering control message (408).

3. The method of any of the claims 1 to 2, further comprising
in response to the transport block for transmission containing a specified control message (401), determining the transmission priority as a predefined or preconfigured value (404).

4. The method of claim 1, wherein determining the transmission priority from the highest priority among priorities of the plurality of logical channels (403) further comprises:
in response to a mapping between the transmission priority and the highest priority among priorities of the plurality of logical channels being required (4031), mapping the highest priority among priorities of the plurality of logical channels to a mapped value of the transmission priority based on a map between a first group of logical channel priorities and a second group of transmission priorities (4032), and determining the transmission priority as the mapped value (4033), and
in response to the mapping being not required (4031), determining the transmission priority as the highest priority among priorities of the plurality of logical channels (4034).

5. The method of claim 1, further comprising, before determining the transmission priority from the highest priority among priorities of the plurality of logical channels (403):
amending priorities of logical channels carrying control messages as predefined or preconfigured priorities respectively.

6. The method of claim 1, wherein at least one of the plurality of logical channels carries control messages.

7. The method of claim 1, wherein the specified control message is carried in a specified sidelink Media Access Control, MAC, Control Element, CE, or a specified radio resource control message, the specified control message comprising any of the following:
a triggering control message triggering a control signaling procedure to be initiated in another device,
a channel state information value report,
a signal power report, and
a signal strength report.

8. The method of claim 2, wherein the triggered control message comprises any of the following:
a radio resource control message,
a channel state information value report,
a signal power report, and
a signal strength report.

9. The method of any of the claims 1 to 3,
wherein the transport block for transmission comprises a media access control packet data unit, and/or
wherein the transmission priority is a layer-1 parameter and used in a layer-1 procedure, or the transmission priority is a layer-2 parameter and used in a layer-2 procedure.

10. The method of claim 3, wherein the predefined or preconfigured value is predefined or preconfigured by the device (600) or radio network by which it is covered.

11. The method of claim 1, wherein the transport block for transmission is associated with the plurality of logical channels in that the transport block is used to multiplex the plurality of logical channels into a single channel in which the transport block is transmitted.

12. A communication device for determining transmission priority for its transmission to another device (120) in a device-to-device communication, adapted to perform
- determining whether the transmission is a retransmission; and
- in response to the transmission being a retransmission (405), determining (406) the transmission priority according to a rule comprising the transmission priority is different from a priority of the last transmission for the same transport block, wherein in response to the transport block for transmission being associated with a plurality of logical channels (402), and the transport block for transmission not containing a specified control message (401), determining the transmission priority as the highest priority among priorities of the plurality of logical channels, and wherein the device receives transmission priority related configuration from the radio network via signaling (504), and wherein the transmission priority related configuration includes priorities of the plurality of logical channels.

13. The communication device of claim 12, further adapted to perform the method of any of claims 2-11.

14. Computer program (710), comprising instructions which, when executed on at least one processor, cause the at least one processor to carry out the method according to any one of claims 1-11.

## Patentansprüche

1. Verfahren, das von einer Vorrichtung (600) durchgeführt wird, um eine Übertragungspriorität für eine Übertragung zu einer anderen Vorrichtung (120) in einer Vorrichtung-zu-Vorrichtung-Kommunikation zu bestimmen, wobei das Verfahren umfasst:
Bestimmen, ob die Übertragung eine erneute Übertragung ist; und
als Reaktion darauf, dass die Übertragung eine erneute Übertragung (405) ist, Bestimmen (406) der Übertragungspriorität gemäß einer Regel, die umfasst, dass sich die Übertragungspriorität von einer Priorität der letzten Übertragung für denselben Transportblock unterscheidet, wobei als Reaktion darauf, dass der Transportblock zur Übertragung mit einer Vielzahl von logischen Kanälen (402) verknüpft ist und der Transportblock zur Übertragung keine spezifizierte Steuerungsnachricht (401) enthält, die Übertragungspriorität als höchste Priorität unter den Prioritäten der Vielzahl von logischen Kanälen bestimmt wird, und wobei die Vorrichtung eine auf die Übertragungspriorität bezogene Konfiguration über Signalisierung (504) von dem Funknetz empfängt, und wobei die auf die Übertragungspriorität bezogene Konfiguration Prioritäten der Vielzahl von logischen Kanälen einschließt.

2. Verfahren nach Anspruch 1, ferner umfassend:
als Reaktion darauf, dass der Transportblock zur Übertragung eine ausgelöste Steuerungsnachricht als Reaktion auf eine auslösende Steuerungsnachricht (407) umfasst, Bestimmen der Übertragungspriorität als die der auslösenden Steuerungsnachricht (408).

3. Verfahren nach einem der Ansprüche 1 bis 2, ferner umfassend:
als Reaktion darauf, dass der Transportblock zur Übertragung eine spezifizierte Steuerungsnachricht (401) enthält, Bestimmen der Übertragungspriorität als ein vordefinierter oder vorkonfigurierter Wert (404).

4. Verfahren nach Anspruch 1, wobei das Bestimmen der Übertragungspriorität aus der höchsten Priorität unter den Prioritäten der Vielzahl von logischen Kanälen (403) ferner umfasst:
als Reaktion auf eine erforderliche Zuordnung zwischen der Übertragungspriorität und der höchsten Priorität unter den Prioritäten der Vielzahl von logischen Kanälen (4031), Zuordnen der höchsten Priorität unter den Prioritäten der Vielzahl von logischen Kanälen zu einem zugeordneten Wert der Übertragungspriorität basierend auf einer Zuordnung zwischen einer ersten Gruppe von Prioritäten logischer Kanäle und einer zweiten Gruppe von Übertragungsprioritäten (4032), und Bestimmen der Übertragungspriorität als den zugeordneten Wert (4033), und
als Reaktion darauf, dass die Zuordnung nicht erforderlich ist (4031), Bestimmen der Übertragungspriorität als höchste Priorität unter den Prioritäten der Vielzahl von logischen Kanälen (4034).

5. Verfahren nach Anspruch 1, ferner umfassend vor dem Bestimmen der Übertragungspriorität aus der höchsten Priorität unter den Prioritäten der Vielzahl von logischen Kanälen (403):
Ändern von Prioritäten logischer Kanäle, die Steuerungsnachrichten tragen, als vordefinierte bzw. vorkonfigurierte Prioritäten.

6. Verfahren nach Anspruch 1, wobei mindestens einer aus der Vielzahl von logischen Kanälen Steuerungsnachrichten trägt.

7. Verfahren nach Anspruch 1, wobei die spezifizierte Steuerungsnachricht in einem spezifizierten Sidelink-Medienzugriffssteuerungs-Steuerelement, MAC-CE, oder einer spezifizierten Funkressourcen-Steuerungsnachricht getragen wird, wobei die spezifizierte Steuerungsnachricht eines der Folgenden umfasst:
eine auslösende Steuerungsnachricht, die ein in einer anderen Vorrichtung zu initiierendes Steuerungssignalisierungsverfahren auslöst,
einen Kanalzustandsinformationswertebericht,
einen Signalleistungsbericht, und
einen Signalstärkebericht.

8. Verfahren nach Anspruch 2, wobei die ausgelöste Steuerungsnachricht eines der Folgenden umfasst:
eine Funkressourcensteuerungsnachricht,
einen Kanalzustandsinformationswertebericht,
einen Signalleistungsbericht und
einen Signalstärkebericht.

9. Verfahren nach einem der Ansprüche 1 bis 3,
wobei der Transportblock zur Übertragung eine Medienzugriffssteuerungs-Paketdateneinheit umfasst, und/oder
wobei die Übertragungspriorität ein Layer-1-Parameter ist und in einem Layer-1-Verfahren verwendet wird, oder die Übertragungspriorität ein Layer-2-Parameter ist und in einem Layer-2-Verfahren verwendet wird.

10. Verfahren nach Anspruch 3, wobei der vordefinierte oder vorkonfigurierte Wert durch die Vorrichtung (600) oder das Funknetz, durch die bzw. das er abgedeckt wird, vordefiniert oder vorkonfiguriert wird.

11. Verfahren nach Anspruch 1, wobei der Transportblock zur Übertragung mit der Vielzahl von logischen Kanälen verknüpft ist, in der der Transportblock verwendet wird, um die Vielzahl von logischen Kanälen in einen einzigen Kanal zu multiplexen, in dem der Transportblock übertragen wird.

12. Kommunikationsvorrichtung zum Bestimmen einer Übertragungspriorität für ihre Übertragung an eine andere Vorrichtung (120) in einer Vorrichtung-zu-Vorrichtung-Kommunikation, die geeignet ist, um Folgendes durchzuführen:
- Bestimmen, ob die Übertragung eine erneute Übertragung ist; und
- als Reaktion darauf, dass die Übertragung eine erneute Übertragung (405) ist, Bestimmen (406) der Übertragungspriorität gemäß einer Regel, die umfasst, dass sich die Übertragungspriorität von einer Priorität der letzten Übertragung für denselben Transportblock unterscheidet, wobei als Reaktion darauf, dass der Transportblock zur Übertragung mit einer Vielzahl von logischen Kanälen (402) verknüpft ist und der Transportblock zur Übertragung keine spezifizierte Steuerungsnachricht (401) enthält, die Übertragungspriorität als höchste Priorität unter den Prioritäten der Vielzahl von logischen Kanälen bestimmt wird, und wobei die Vorrichtung eine auf die Übertragungspriorität bezogene Konfiguration über Signalisierung (504) von dem Funknetz empfängt, und wobei die auf die Übertragungspriorität bezogene Konfiguration Prioritäten der Vielzahl von logischen Kanälen einschließt.

13. Drahtlose Kommunikationsvorrichtung nach Anspruch 12, ferner geeignet, um das Verfahren nach einem der Ansprüche 2 bis 11 durchzuführen.

14. Computerprogramm (710), umfassend Anweisungen, die, wenn sie auf mindestens einem Prozessor ausgeführt werden, den mindestens einen Prozessor veranlassen, das Verfahren nach einem der Ansprüche 1 bis 11 durchzuführen.

## Revendications

1. Procédé exécuté par un dispositif (600) destiné à déterminer une priorité de transmission pour une transmission à un autre dispositif (120) dans une communication de dispositif à dispositif, le procédé comprenant
la détermination du fait que la transmission est une retransmission ; et
en réponse à la transmission qui est une retransmission (405), la détermination (406) de la priorité de transmission en fonction d'une règle comprenant la priorité de transmission est différente d'une priorité de la dernière transmission pour le même bloc de transport, dans lequel, en réponse au bloc de transport pour transmission qui est associé à une pluralité de canaux logiques (402), et au bloc de transport pour transmission ne contenant pas de message de commande spécifié (401), la détermination de la priorité de transmission comme la priorité la plus élevée parmi des priorités de la pluralité de canaux logiques, et dans lequel le dispositif reçoit une configuration liée à la priorité de transmission à partir du réseau radio par l'intermédiaire d'une signalisation (504), et dans lequel la configuration liée à la priorité de transmission comporte des priorités de la pluralité de canaux logiques.

2. Procédé selon la revendication 1, comprenant en outre
en réponse au bloc de transport pour transmission comprenant un message de commande déclenché en réponse à un message de commande de déclenchement (407), la détermination de la priorité de transmission comme étant celle du message de commande de déclenchement (408).

3. Procédé selon l'une quelconque des revendications 1 à 2, comprenant en outre
en réponse au bloc de transport pour transmission contenant un message de commande spécifié (401), la détermination de la priorité de transmission comme une valeur (404) prédéfinie ou préconfigurée.

4. Procédé selon la revendication 1, dans lequel la détermination de la priorité de transmission à partir de la priorité la plus élevée parmi des priorités de la pluralité de canaux logiques (403) comprend en outre :
en réponse à un mappage entre la priorité de transmission et la priorité la plus élevée parmi des priorités de la pluralité de canaux logiques qui est requis (4031), le mappage de la priorité la plus élevée parmi des priorités de la pluralité de canaux logiques à une valeur mappée de la priorité de transmission sur la base d'un mappage entre un premier groupe de priorités de canal logique et un second groupe de priorités de transmission (4032), et la détermination de la priorité de transmission comme la valeur mappée (4033), et
en réponse au mappage qui n'est pas requis (4031), la détermination de la priorité de transmission comme la priorité la plus élevée parmi des priorités de la pluralité de canaux logiques (4034).

5. Procédé selon la revendication 1, comprenant en outre, avant de déterminer la priorité de transmission à partir de la priorité la plus élevée parmi des priorités de la pluralité de canaux logiques (403) :
la modification de priorités de canaux logiques transportant des messages de commande comme des priorités prédéfinies ou préconfigurées, respectivement.

6. Procédé selon la revendication 1, dans lequel au moins l'un de la pluralité de canaux logiques transporte des messages de commande.

7. Procédé selon la revendication 1, dans lequel le message de commande spécifié est transporté dans un élément de commande, EC, de commande d'accès au support, MAC, de liaison latérale spécifié, ou dans un message de commande de ressource radio spécifié, le message de commande spécifié comprenant l'un quelconque de ce qui suit :
un message de commande de déclenchement déclenchant une procédure de signalisation de commande à lancer dans un autre dispositif,
un rapport de valeur d'information d'état de canal,
un rapport de puissance de signal, et
un rapport d'intensité de signal.

8. Procédé selon la revendication 2, dans lequel le message de commande déclenché comprend l'un quelconque de ce qui suit :
un message de commande de ressource radio,
un rapport de valeur d'information d'état de canal,
un rapport de puissance de signal, et
un rapport d'intensité de signal.

9. Procédé selon l'une quelconque des revendications 1 à 3,
dans lequel le bloc de transport pour transmission comprend une unité de données de paquet de commande d'accès au support, et/ou
dans lequel la priorité de transmission est un paramètre de couche 1 et est utilisée dans une procédure de couche 1, ou la priorité de transmission est un paramètre de couche 2 et est utilisée dans une procédure de couche 2.

10. Procédé selon la revendication 3, dans lequel la valeur prédéfinie ou préconfigurée est prédéfinie ou préconfigurée par le dispositif (600) ou un réseau radio par lequel **il** est couvert.

11. Procédé selon la revendication 1, dans lequel le bloc de transport pour transmission est associé à la pluralité de canaux logiques par le fait que le bloc de transport est utilisé pour multiplexer la pluralité de canaux logiques en un seul canal dans lequel le bloc de transport est transmis.

12. Dispositif de communication destiné à déterminer une priorité de transmission pour sa transmission à un autre dispositif (120) dans une communication de dispositif à dispositif, conçu pour effectuer
- la détermination du fait que la transmission est une retransmission ; et
- en réponse à la transmission qui est une retransmission (405), la détermination (406) de la priorité de transmission en fonction d'une règle comprenant la priorité de transmission est différente d'une priorité de la dernière transmission pour le même bloc de transport, dans lequel, en réponse au bloc de transport pour transmission qui est associé à une pluralité de canaux logiques (402), et au bloc de transport pour transmission ne contenant pas de message de commande spécifié (401), la détermination de la priorité de transmission comme la priorité la plus élevée parmi des priorités de la pluralité de canaux logiques, et dans lequel le dispositif reçoit une configuration liée à la priorité de transmission à partir du réseau radio par l'intermédiaire d'une signalisation (504), et dans lequel la configuration liée à la priorité de transmission comporte des priorités de la pluralité de canaux logiques.

13. Dispositif de communication selon la revendication 12, conçu en outre pour effectuer le procédé selon l'une quelconque des revendications 2 à 11.

14. Programme d'ordinateur (710), comprenant des instructions qui, lorsqu'elles sont exécutées sur au moins un processeur, amènent l'au moins un processeur à mettre en œuvre le procédé selon l'une quelconque des revendications 1 à 11.
